# EUROPEAN PATENT SPECIFICATION

(11) **EP 2 757 771 B1**
(45) Date of publication and mention of the grant of the patent: **02.09.2020**
(21) Application number: 14150838.2
(22) Date of filing: 10.01.2014
(51) Int. Cl.: H04N 5/232

(54) **Image pickup apparatus, remote control apparatus, and methods of controlling image pickup apparatus and remote control apparatus**
Bildaufnahmevorrichtung, Fernsteuerungsvorrichtung und Verfahren zur Steuerung der Bildaufnahmevorrichtung und der Fernsteuerungsvorrichtung
Appareil de capture d'image, appareil de commande à distance, et procédés de commande de ces deux appareils

(30) Priority: 17.01.2013 JP 2013005840
(43) Date of publication of application: 23.07.2014
(73) Proprietor: CANON KABUSHIKI KAISHA, Ohta-ku Tokyo 146-8501 (JP)
(72) Inventor: Morimoto, Yosuke, Ohta-ku, Tokyo (JP)
(74) Representative: Hitching, Peter Matthew

(56) References cited:
- WO-A1-2014/111923
- US-A1- 2008 267 451
- US-A1- 2009 245 776
- US-A1- 2012 133 778
- US-B1- 6 809 759

## Description

### BACKGROUND OF THE INVENTION

### Field of the Invention

The present invention relates a control of a remote control system of an image pickup apparatus including the image pickup apparatus and a remote control terminal which externally operates the image pickup apparatus.

### Description of the Related Art

Japanese Patent Laid-open No. 2009-273033 discloses a camera system including a camera 2 and a controller 1 which can externally control the camera 2. In such camera system, by an operator operating the controller 1, the focus position and photometric position can be set (specified) at the position of an intended subject while observing shot image data sent from the camera 2. At such setting, the controller 1 sends information relating to the set position of the subject to the camera 2. Thereby, the camera 2 can execute AF processing and the like at the position of the intended subject on the basis of the received position information.

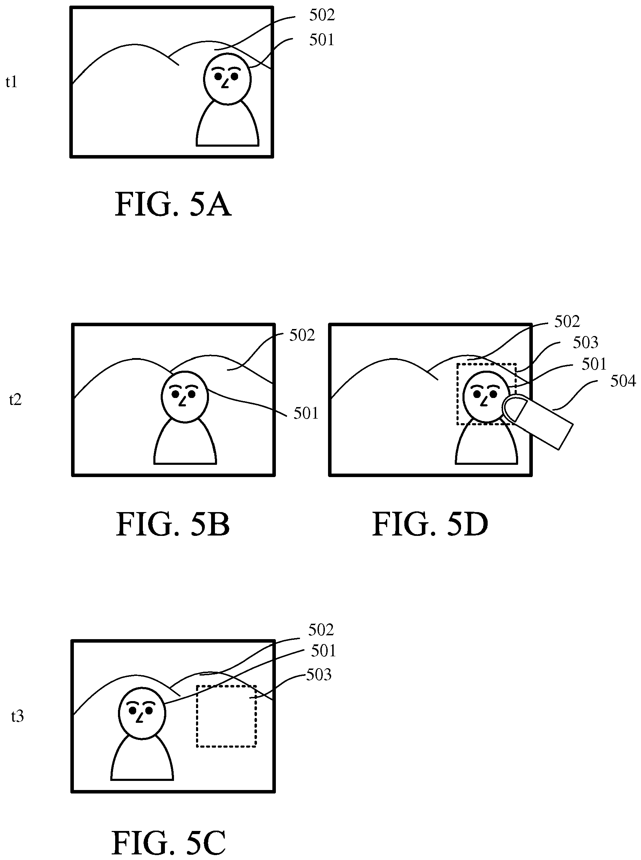

However, in the above described conventional art, there has been a problem that the AF and AE controls are performed with respect to an object different from the specified object when an operator attempts to perform the AF and AE controls with respect to an object which is moving, such as a moving person. Hereinafter, this problem will be described with reference to FIGS. 5A to 5D.

FIGS. 5A to 5D are images which are shot by the camera 2 and an image which is displayed in the controller 1. FIGS. 5A, 5B and 5C on the left side are images in the camera 2 at the time t1, t2 and t3, respectively, and time elapses in the order of time t1, t2, and t3. FIG. 5D on the right side is an image in the controller 1 at the time t2.

In the display of the controller 1, a real time video image is sent from the camera 2 through a wireless or cabled communicator. However, since data amount of image data is large, a delay occurs in the time until the video image which is shot by the camera 2 is to be displayed on the display of the controller 1 through communication. This delay is caused by the time needed for data communication and the time for compressing image data in the camera 2 to reduce communication data amount and restoring the compressed data in the controller 1, etc.

An operation under the conventional art when there is a delay in image data communication will be described with reference to FIGS. 5A to 5D. FIG. 5A is an image shot by the camera 2 at the time of time t1, and a person 501 and a background 502 is included. Because the delay occurs between sending of the image of FIG. 5A to the controller 1 and displaying of the image, this image is to be displayed in the controller 1 at the time of time t2 (FIG. 5B). An operator specifies the part of the person 501 in the screen of FIG. 5D with a finger 504 in the touch panel and thereby attempts to command the camera 2 to perform the AF and AE controls with respect to the person 501. The controller 1 detects the touched position and decides the target region 503 indicated by dotted lines which is the target for the AF and AE controls. The controller 1 further sends the position information of the target region 503 and a control command to instruct performing the AF and AE controls with respect to the target region 503 to the camera 2. Then, at the time of time t3, the camera 2 receives the position information of the target region 503 and the control command, and the camera 2 executes the AF and AE controls with respect to the target region 503.

However, if the person 501 has moved from the right side to the left side in the screen as illustrated in FIGS. 5A, 5B, and 5C in this order, only the background 502 is included in the target region 503 which is the target for the AF and AE controls at the time of time t3 and the person 501 is outside of the target region. Therefore, the AF and AE controls are to be executed with respect to the background 502 instead of the person 501.

Due to the communication delay between the camera 2 and the controller 1, in the conventional art, there has been a problem that the AF and AE controls are executed with respect to an object different from the object targeted by an operator because the region to perform the AF and AE controls cannot be specified accurately with respect to a moving object. Document WO 2014/111923 which has a publication date of 24 July 2014 discloses a tracking method and system wherein a succession images is generated at a sensing unit; one or more moving object in the succession of images is identified; an object tag is assigned to at least one of the moving objects to yield in a respective tagged object; responsive to a command received from a control unit indicative of a selected object, identifying a location of the selected object in a latest available captured image, wherein: if the selected object is a moving object, the selected object is identified in the latest available captured image based on a respective object tag; and if the selected object is a stationary object, the selected object is identified using an image or piece thereof comprising the at least one selected object. Document US 2009/0245776 discloses an image capturing device includes a lens unit, an image sensor, a face recognition unit, a selecting unit, an auto-focusing (AF) unit and a driving unit. The lens unit focuses images onto the image sensor. The image sensor converts the images into electronic signals. The face recognition unit locates any faces in a current image. If faces are detected, the selecting unit indicates to a user where the faces are located in the image, and selects one of the locations as a main focus area in response to a user input. The driving unit is configured for moving the lens unit. The AF unit controls the driving unit to focus the lens unit according to the selected location. Document US 6809759 discloses a previewing system has a remote control that is detachably fixed to an image-capturing device. The remote control comprises a display panel and a control panel. A user can detach the remote control from the image-capturing device and use the control panel of the remote control to remotely control functionality of the image-capturing device. Furthermore, with the display panel, the user can preview an image that the image-capturing device will capture. Document US 2012/0133778 discloses an object region tracking and picturing module is constructed on a moving platform of a mobile end and a remote control module is constructed on anther platform for an image object region tracking system. The two modules communicate with each other via a digital network for delivering required information. The object region tracking and picturing module uses a real-time image backward search technology to store at least an image frame previously captured on the moving platform into a frame buffer, and start tracking an object region from the position pointed out by the remote control module to a newest image frame captured on the moving platform, then find out a relative position on the newest image frame for the tracked object region.

### SUMMARY OF THE INVENTION

The present invention provides an image pickup apparatus, a remote control apparatus, a method of controlling the image pickup apparatus, and a method of controlling the remote control apparatus which are advantageous to an image pickup control even when a communication delay occurs between the image pickup apparatus and the communication apparatus.

The present invention in its first aspect provides an image pickup apparatus as specified in claims 1 to 7.

The present invention in its second aspect provides a communication apparatus as specified in claims 8 to 15.

The present invention in its third aspect provides a method of controlling an image pickup apparatus as specified in claims 16 to 22.

The present invention in its fourth aspect provides a method of controlling a communication apparatus as specified in claims 23 to 30.

Further aspects of the present invention provide programs as specified in claims 31 and 32.

Further features of the present invention will become apparent from the following description of exemplary embodiments (with reference to the attached drawings).

### BRIEF DESCRIPTION OF THE DRAWINGS

FIG. 1 is a block diagram illustrating a configuration of a camera body 101 and a remote control terminal 102 in an embodiment of the present invention.
FIGS. 2A to 2D are diagrams for use in explaining controls of object detecting, identification information setting, and object tracking in the camera body 101 in the embodiment of the present invention.
FIGS. 3A to 3F are diagrams for use in explaining a determining process of object identifying information performed in the remote control terminal 102 in the embodiment of the present invention.
FIGS. 4A and 4B are flowcharts illustrating specification process operation of an AF and AE control region in communication between the camera body 101 and the remote control terminal 102 in the embodiment of the present invention.
FIGS. 5A to 5D are diagrams illustrating a false operation of an AF and AE control region specification in a case where an object is moving in a conventional art.

### DESCRIPTION OF THE EMBODIMENTS

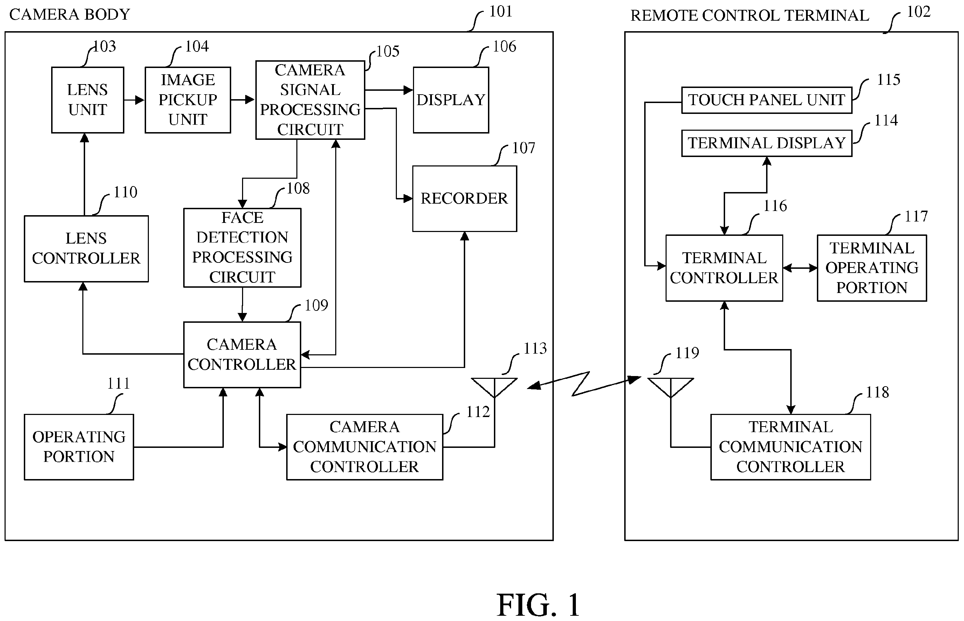

FIG. 1 illustrates a block diagram of a configuration of a digital video camera (hereinafter, referred to as a camera body) and a remote control terminal (a communication apparatus) having a function to remotely (externally) operate the camera body (an image pickup apparatus), which is an embodiment of the present invention. Although a case where the camera body is a digital video camera will be described in this embodiment, the present invention can also be applied to other image pickup apparatuses such as digital still cameras.

In FIG. 1, reference numerals 101 and 102 respectively denote a camera body (an image pickup apparatus) and a remote control terminal (a communication apparatus). First, components of the camera body 101 will be described.

Reference numeral 103 denotes a lens unit that is an image pickup optical system, which is configured by including a plurality of optical lenses including a focus lens for focusing of an object image, a stop for adjusting an amount of light that passes through lenses, motors for driving the above parts, etc. In this embodiment, a configuration of an image pickup apparatus where the lens unit is integral with the camera body, so-called lens built-in type image pickup apparatus, is described as an example. However, a configuration of a lens interchangeable type image pickup apparatus such as a single-lens reflex camera, so-called interchangeable lens system, may also be adopted.

Reference numeral 104 denotes an image pickup unit, which is configured by including an image pickup element (an image pickup device) such as a CCD sensor or a CMOS sensor which performs photoelectric conversion on an object image (an optical image) via an optical system, a signal processing circuit which performs sampling, gain adjustment, and digitalization on the output from the image pickup element, etc. Reference numeral 105 denotes a camera signal processing circuit which performs various kinds of image processing on an output signal from the image pickup unit 104 and generates a video signal (an image signal). In addition, in the camera signal processing circuit 105, a focus signal used for the focusing, and a luminance signal used for exposure adjustment are generated based on the image signal of the after-mentioned AF region and AE region which are set by the camera controller 109 to be output to the camera controller 109.

Reference numeral 106 denotes a display which displays the image signal from the camera signal processing circuit 105, and reference numeral 107 denotes a recorder which records the image signal from the camera signal processing circuit 105 on a storage medium such as a magnetic tape, an optical disk, a semiconductor memory, etc.

Reference numeral 108 denotes a face detection processing circuit (an object detector) which performs a known face detection process on the image signal from the camera signal processing circuit 105 and detects a position and a size of a face region of a person (an object region) in a shot image screen. As for a known face detection process, for example, a method of detecting a face by a matching level with a face contour plate which is prepared in advance by extracting a skin color region from tone color of pixels represented in image data is known. Further, for example, a method of performing pattern recognition using a feature point in a face such as eyes, nose, mouth, etc., which are extracted is also known.

The face detection processing circuit 108 outputs the detection result to the camera controller 109. The camera controller 109 is a microcomputer which controls the camera body 101 on the basis of a control program. The camera controller 109 executes various kinds of controls of the camera body 101 in this embodiment, as described hereinafter. A memory such as a flash ROM or a DRAM, which is not shown, is connected to the camera controller 109 to store the control program and data therein. In such a way, the camera controller (controller) 109 can perform an image pickup control (an AF control (automatic focus control), an AE control (an automatic exposure control), AWB control, etc.) with respect to an object which is detected in the face detection processing circuit 108. Moreover, the camera controller (tracker) 109 can track the position of the detected object even if the object moves and the AF and AE controls can be performed accurately with respect to the moving object by moving the AF and AE control region according to the moved object position, for example.

Reference numeral 110 denotes a lens controller, which controls the motors of the lens unit 103 based on control signals output from the camera controller 109 to drive the focus lens and the stop. Reference numeral 111 denotes an operating portion which is configured with an operation key, a touch panel, etc., and the operating portion is used when a user performs recording, replaying of recorded images, various setting, etc. by operating the camera body 101 and the operation signal is output to the camera controller 109.

Reference numeral 112 denotes a camera communication controller which controls communication for sending and receiving image data (a moving image or a video) and control data with the remote control terminal 102. As for the communication, wireless communication such as wireless LAN, mobile phone lines, etc. may be used or cabled communication such as cabled LAN, etc. may be used. Reference numeral 113 denotes a communicator (a first communicator) which is used for wireless communication, and the communicator 113 may be an antenna for inputting and outputting radio signals.

Next, components of the remote control terminal 102 will be described. Reference numeral 114 denotes a terminal display which displays image data received from the camera body 101, various kinds of setting data, and the like, and the terminal display 114 is configured with a liquid crystal display apparatus (LCD) or the like. The touch panel unit 115 is arranged so as to overlap a display surface of the terminal display 114 and outputs coordinate information (operation information) when a user touches on the touch panel to the after-mentioned terminal controller 116.

The terminal controller 116 is a microcomputer which integrally controls the remote control terminal 102 on the basis of a control program stored in a memory or the like which is not shown. The terminal controller 116 executes various kinds of controls of the remote control terminal 102 in this embodiment, as described hereinafter. Here, a memory such as a flash ROM or a DRAM, which is not shown, for storing the control program and data is also connected to the terminal controller 116.

Reference numeral 117 denotes a terminal operating portion which is configured with an operation key, etc. and the terminal operating portion 117 is used when a user performs various kinds of setting and the like by operating the remote control terminal 102 and outputs an operation signal to the terminal controller 116. When the terminal operating portion 117 is provided with an arrow key and an OK key for selecting an operation menu and specifying a screen region in the terminal display 114, the touch panel unit 115 may also be omitted.

Reference numeral 118 denotes a terminal communication controller which controls communication for sending and receiving image data and control data with the camera body 101. Reference numeral 119 denotes a communicator (a second communicator) which is used for wireless communication, and the communicator 119 may be an antenna for inputting and outputting radio signals.

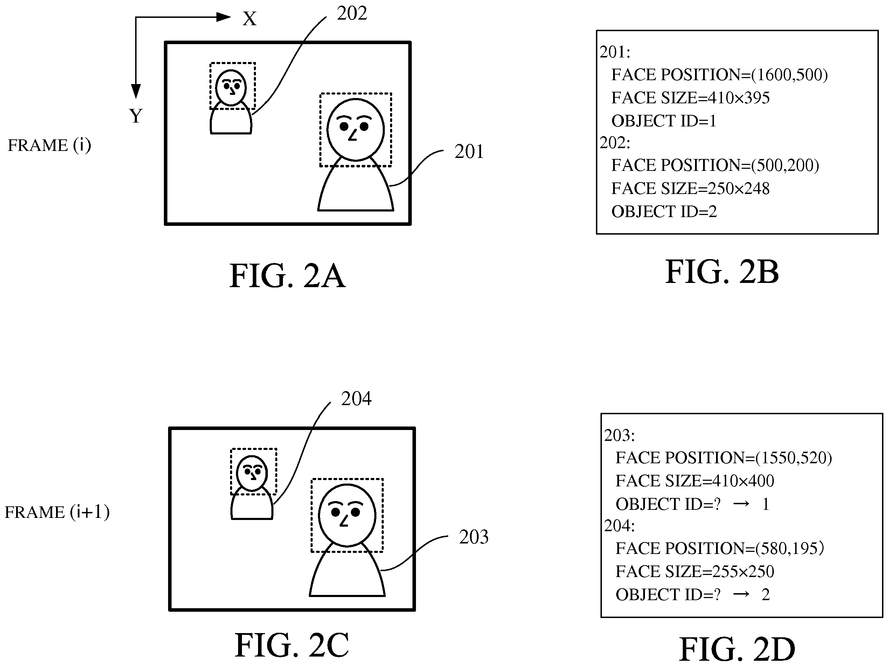

Next, detection of an object (a face), a setting of identification information, and a control of tracking the object, which are performed by the camera body 101, will be described with reference to FIGS. 2A to 2D.

FIG. 2A is a video frame (denoted as frame (i)) which is picked up in the camera body 101 at a certain time, and person images 201 and 202 are picked up in a screen. Here, it is assumed that the person images 201 and 202 are picked up for the first time in this screen. FIG. 2B illustrates a result of face detection by the face detection processing circuit 108 in the image (in the screen) of FIG. 2A, and the positions (face positions) in the screen and the sizes (face sizes) of the faces of the person images 201 and 202 are detected. The face positions and the face sizes are represented in pixel units in a coordinate system where a horizontal axis in the screen is an X axis and a vertical axis in the screen is a Y axis. The frames of dotted lines in the screen of FIG. 2A indicate the positions and the sizes of the faces which are detected by the face detection processing circuit 108 to be superimposed on the image. These detection results are output to the camera controller 109 as described above, and the camera controller 109 (an identification information generator) sets (generates) object IDs which are identification information of the detected objects. Because the person images 201 and 202 are detected in the frame (i) for the first time as described above, the object IDs = 1 and 2 are set and the IDs are stored in a memory, which is not shown, along with the face positions and the face sizes.

FIG. 2C is the next frame of the frame (i) (denoted as frame (i+1)), and person images 203 and 204 are being picked up. The person images 203 and 204 are same persons as the person images 201 and 202, however, their positions and sizes have slightly changed because they are moving. FIG. 2D illustrates the results of face detection with respect to this image. Here, the frame (i+1) and the frame (i) do not have to be continuous and the interval therebetween may be a number of frames according to the processing ability of the face detection processing circuit 108. These detection results are also output to the camera controller 109, and the camera controller 109 compares them to the data of the person images 201 and 202 which is the latest detection results.

By comparing the data of the face positions and the face sizes of the person images 201 and 202 to the data of the face positions and the face sizes of the person images 203 and 204, it is recognized that the data of the person image 203 is close to that of the person image 201. Further, it is recognized that the data of the person image 204 is close to that of the person image 202. Therefore, it is determined that the person images 203 and 201 are of the same person and the same object ID as that of the person image 201, which is ID=1, is reset for the person image 203. Similarly, it is determined that the person images 204 and 202 are of the same person and the same object ID as that of the person image 202, which is ID=2, is reset for the person image 204. By repeating the above process with respect to the frames hereafter, the same object ID can be set for the same object even if the object is moving and its position can be tracked.

If, for example, the object having ID=2 moves outside of the screen during tracking and its face cannot be detected, ID=2 will be set as vacant because there is no object which is intended for ID=2. If a new object came in to the screen, a new object ID (for example, ID=3) is set so that the object ID does not overlap with other objects in the screen which were there from before. If a new object comes in in a state where ID=2 is vacant, overlapping does not occur as the vacant ID=2 is allocated. However, when there is a communication delay between the camera body and the remote control terminal, the object IDs may not match between the camera body and the remote control terminal. Therefore, it is preferable that ID=2 remains vacant during the time corresponding to at least to the communication delay.

As described above, even if a plurality of objects (faces) exist on the screen, individual objects can be identified by the object IDs which the camera controller 109 allocates as their identification information. Further, by comparing the face detection results of continuous video frames, whether the object is the same or not can be determined even if the object (face) is moving in the screen and the position of each object can be tracked. Furthermore, by controlling so that the setting of the AF region and the AE region with respect to the camera signal processing circuit 105 is updated in a way that the position of the tracked object is always to be the target for the AF and AE controls, the AF and AE control region can be moved in conformity with the moving object. Here, detailed algorithms are omitted because they are well known.

Although data of the face position and the face size are used for tracking an object in the above description, either one may be used or other detection data may be used together. For example, in recent years, a face recognition function which compares an image shot by the camera to the face features of a specific person which are registered in advance to identify the face of the specific person and not only detecting persons' faces in an image has been put to practical use. In a case of a camera equipped with such function, the position of an object can be tracked by using the face recognition function and not by the resemblance of the face positions and the face sizes between frames as described above. Further, in a case where the object having ID=2 moves out of the screen and comes back in to the screen again, for example, if the objects can be determined that they are the same person by the face recognition function, the previously set ID=2 is set instead of setting a new ID. In such way, the object can be continued to be tracked even if the object goes in and out of the screen.

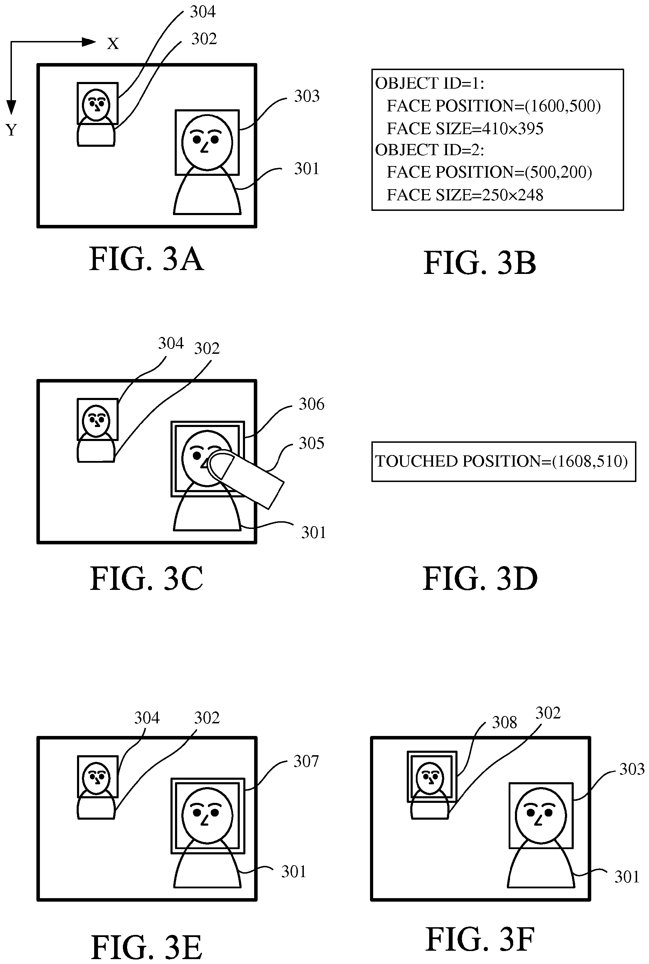

Next, a process of determining identification information of an object which is selected by a user in the remote control terminal 102 will be described with reference to FIGS. 3A to 3F.

FIG. 3A is a displayed image in the terminal display 114 of the remote control terminal 102 at a certain time, and an image corresponding to the image signal received from the camera body 101 is displayed. FIG. 3B illustrates data of object IDs (object identification information), face positions (position information of the objects) and face sizes (size information of the objects) which are received in an approximately synchronized manner with the image which is displayed in FIG. 3A. The face positions and the face sizes are indicated in pixel units in a coordinate system where the horizontal axis on the screen is the X axis and the vertical axis on the screen is the Y axis. In the image of FIG. 3A, person images 301 and 302 are picked up, and they correspond to object IDs=1 and 2, respectively. The frame displays (visual indications) 303 and 304 indicate face regions obtained from the data of the face positions and the face sizes illustrated in FIG. 3B, and they are displayed to be superimposed on the displayed screen.

Hereinafter, first, a process performed in a case where the remote control terminal 102 includes the touch panel unit 115 and a user specifies an object which is the target for the AF and AE controls by operating the touch panel will be described. As illustrated in FIG. 3C, a user's finger 305 touches the face portion of the object 301 in the image which is being displayed in the terminal display 114. At this time, the touched position data illustrated in FIG. 3D is output to the terminal controller 116 from the touch panel unit 115. In the terminal controller (determining portion) 116, the data of the face positions and the face sizes illustrated in FIG. 3B are compared to the touched position data illustrated in FIG. 3D and the object specified by the user is determined. Here, because the touched position data is close to the face region of the object ID=1, it is determined that the user specified the object having object ID=1. In order to notify the user that the object ID is determined, the face region of the determined object is displayed with double frame display 306 surrounding it as illustrated in FIG. 3C. Accordingly, in the remote control terminal including a touch panel, by checking the data of the face positions and the face sizes received from the camera body against the data of the touched position output from the touch panel, the identification information (object ID) of the object which is specified by the user can be determined. Because checking against the touched position data can be performed with the face position data alone, the configuration may be such that face size information is not received from the camera body.

As described above, in the present embodiment, position information and identification information of the object which is being detected and tracked in the camera body are sent to the remote control terminal as well as video data. The position information and identification information can be sent later than the video data if necessary. In the remote control terminal, the position information of the object which a user specified by the touch panel is checked against the position information of the object received from the camera body to determine the identification information of the object specified by the user.

From the remote control terminal to the camera body, the identification information of the object which is specified as the target for the AF and AE controls is sent. In the camera body, which object among the objects in the screen is to be the target for the AF and AE controls is determined by using the identification information received from the remote control terminal. Because the object is being detected and tracked even during the communication delay time in the camera body, the AF and AE control region can be set to the position matching the object even if the object which is specified by the user is moving.

Next, a process performed in a case where the remote control terminal 102 does not include the touch panel unit 115 and a user specifies an object which is the target for the AF and AE controls only by the terminal operating portion 117 will be described. FIGS. 3A and 3B are as described above. In the terminal operating portion 117 of the remote control terminal 102, at least two types of keys (switches), which are a selection key (object selection portion) for selecting an object and an OK key (object deciding portion) for determining an object, are included. If a user pushes the selection key, the operation information is output to the terminal controller 116. The terminal controller 116 controls the terminal display 114 to display the frame display indicating the face region having the object ID=1 by using the double frame 307 as illustrated in FIG. 3E. If the user pushes the selection key again, the face region having the object ID=2 is to be displayed with the double frame 308 as illustrated in FIG. 3F. By controlling the display as described above, the object to be displayed with the double frame in the screen is switched every time a user pushes the selection key. Therefore, a user can select the object which is to be the target for the AF and AE controls from a plurality of objects. Then, if the OK key is pushed in a state where the object which the user intends to specify is displayed with the double frame, the operation information is output to the terminal controller 116. In this way, the terminal controller 116 can detect that the object which is displayed with the double frame at that time is determined as the object target for the control. Therefore, the identification information (object ID) of the object specified by the user can be determined. If the display size of the frame is fixed, the above described display control can be performed only with the face position data alone. Thus, the configuration may be such that the face size information is not received from the camera body.

In specifying a target for the AF and AE controls through the above described touch panel operation, it can be configured so that a position in the screen and not an object (face) is specified as the target for the AF and AE controls if touching is performed on a screen where no face is picked up. Further, it may be configured so that a position in the screen and not an object (face) is specified as the target for the AF and AE controls if a user touches a position other than a face region of an object. That is, in a case where it is determined that an object (face) does not exist at the position touched by a user in the terminal controller 116, it may be specified to the camera body so as to set the AF and AE control region on the basis of the position information of where was touched, similar to the conventional art. Processes performed in such case will be described in detail below.

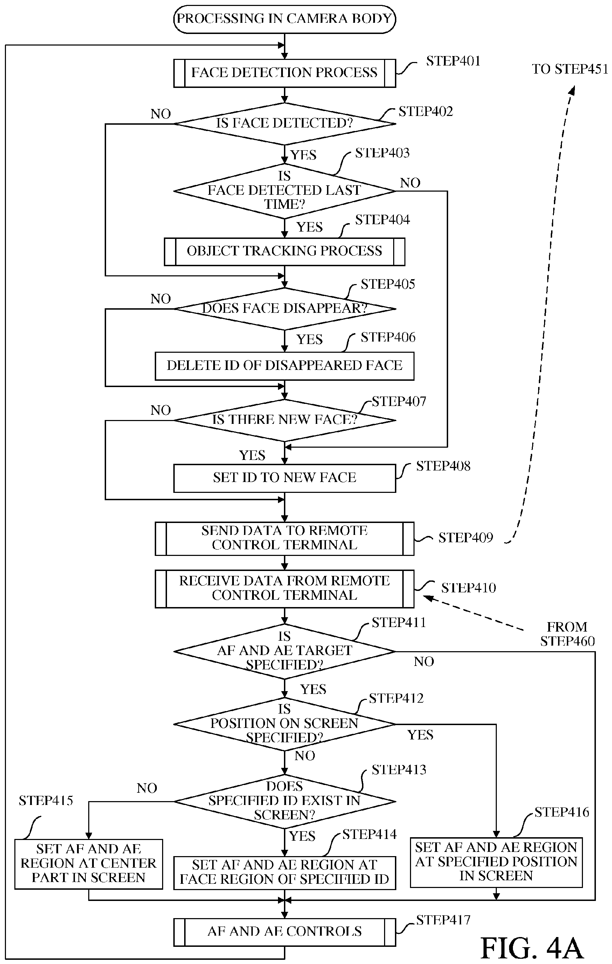

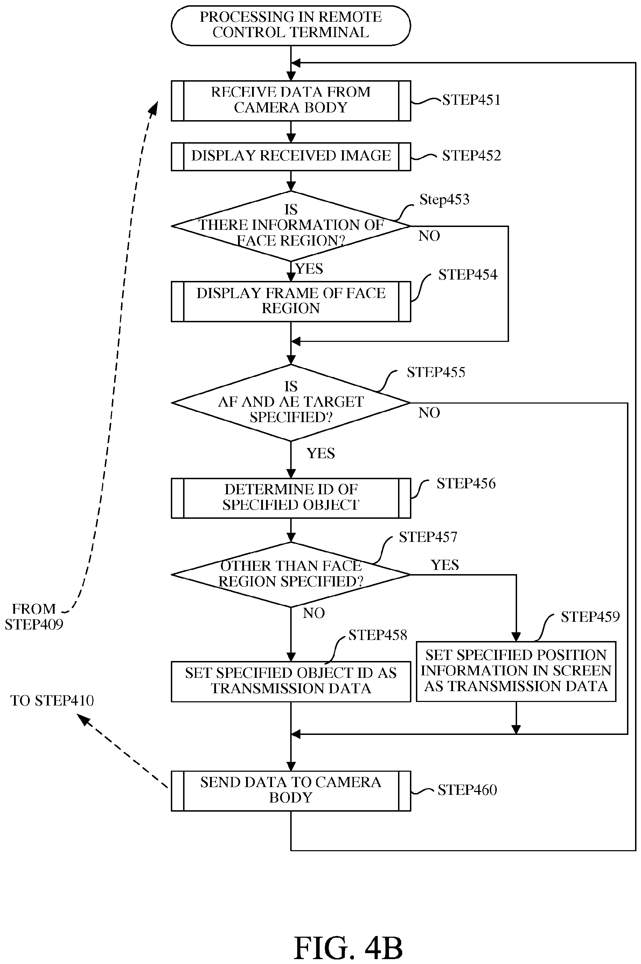

Next, a process of a user specifying the AF and AE control region through communication between the camera body and the remote control terminal will be described by using the flowcharts of FIGS. 4A and 4B. In a remote control system of a general camera, various kinds of operations such as starting and ending of shooting an image (image pickup), setting of camera operation conditions, replaying of recorded images, etc. can be performed. However, descriptions on processes relating to these operations are omitted, and the following description is limited to the processing for specifying the AF and AE control region. Further, it is assumed that the camera body and the remote control terminal are operating in a mode for executing a remote control and that the communication is established already. A description of a known control such as the initial control for establishing the communication is also omitted.

First, processes which are executed in the camera body 101 will be described. These processes are executed in a repeated manner by the camera controller 109 every time the frame of a shot image (picked-up image) is updated, for example. In step 401, the above described known face detection process is executed on an image signal output from the camera signal processing circuit 105. Next, in step 402, whether a face is detected based on the image signal is determined. If it is determined that a face is not detected, the processing proceeds to step 405 because the tracking process will not be executed. If it is determined that a face is detected, the processing proceeds to step 403 and whether a face was detected in the last processing is determined. If it is determined that a face was not detected in the last processing, the processing proceeds to step 408 because the tracking process will not be executed and an object ID is set with respect to the newly detected face. On the other hand, if it is determined that a face was detected in the last processing, the processing proceeds to step 404 and the object tracking process described with reference to FIGS. 2A to 2D is executed.

Next, in step 405, whether there is a face which disappeared from the screen due to moving outside of the screen or the like among the faces detected in the last processing is determined. If it is determined that none of the faces disappeared, the processing proceeds to step 407. On the other hand, if it is determined that there is a face that disappeared, the processing proceeds to step 406 and the object ID of the face which has disappeared is set as a vacant ID as described above and the processing proceeds to step 407. In step 407, whether a new face which was not in the screen during the last processing is detected is determined. If it is determined that there is no new face, the processing proceeds to step 409. On the other hand, if it is determined that there is a new face, the processing proceeds to step 408 and an ID which does not overlap with the object IDs of the already detected faces is to be set with respect to the newly detected face. As described above, if there is an object ID which is vacant, this object ID remains vacant at least for the time corresponding to a communication delay and an ID which does not overlap with the already existing IDs including the vacant ID is set with respect to the newly detected face.

Next, in step 409, the shot image data which is shot by the camera body 101 and the object IDs and data of the face positions and the face sizes detected based on the image are sent to the remote control terminal 102 as described above.

Next, in step 410, various kinds of control data which are sent from the remote control terminal 102 are received and the content of the data is analyzed. Then, in step 411, whether control information to specify a target region for the AF and AE controls (an AF and AE region) is included in the received data is determined. If it is determined that the control information relating to the AF and AE region is not included, the AF and AE region does not need to be changed from the last setting. Therefore, the processing proceeds to step 417 and the AF control and AE control are executed, and then, the processing returns to step 401 and switches to the next processing. On the other hand, if it is determined that the control information relating to the AF and AE region is included, the processing proceeds to step 412.

In step 412, whether an object ID is specified or position information on the screen is specified as a target region for the AF and AE controls is determined. As described below, because the remote control terminal 102 sends the position information of the touched region instead of the object ID to the camera body 101 if a user touches a position other than the face regions, it is determined which information is sent in the embodiment. If it is determined that position information on the screen is specified, the processing proceeds to step 416 and the AF region and the AE region are set for the camera signal processing circuit 105 so that the position specified on the screen becomes the target for the AF and AE controls. In this way, the camera can be controlled so as to set the AF and AE control region on the basis of the touched position similar to the conventional art when a user touches a position other than face regions as described above. In the embodiment, the AF and AE control region is fixedly set to the position on the screen which is received through communication as an example. However, objects of the image at a position in the received screen may be detected, and the AF and AE control region may be tracked by tracking the object image which was at the position by a known art such as performing pattern matching with respect to images thereafter.

On the other hand, in step 412, if it is determined that the object ID is specified as the target region for the AF and AE controls, the processing proceeds to step 413. In step 413, whether the object region corresponding to the specified object ID currently exists in the screen is determined. As described above, the communication delay occurs between the camera body 101 and the remote control terminal 102, and therefore the object corresponding to the specified object ID may have disappeared due to moving outside of the screen during the communication delay. In this case, because there is no target to be set as the AF and AE region, it is determined that the target object does not exist (has disappeared) in step 413 and the processing proceeds to step 415, and then, the AF and AE region is set at the center part in the screen. Here, if there are objects (faces) other than the specified object in the screen, the AF and AE region may be set to another face region in the screen instead of the center of the screen. Although it is not illustrated in the flowchart of FIG. 4A, if a target object does not exist, information indicating this condition may be sent to the remote control terminal 102. In such a case, a warning indicating that the AF and AE region cannot be set to the specified object to a user may be displayed in the remote control terminal, for example.

If it is determined that the object region corresponding to the specified object ID currently exists in the screen in step 413, the processing proceeds to step 414 and the AF and AE region is set to the object region corresponding to the specified object ID. With respect to the object region corresponding to the object ID, its position is being tracked by the above described object tracking process of step 404 even when the object is moving. Therefore, the AF and AE control region can be set correctly even if the communication delay occurs.

Also in the case where any process of steps 414, step 415 and step 416 is executed, the processing proceeds to step 417 and the AF controls and the AE controls are executed, and then, the processing returns to step 401 and switches to the next processing.

Next, processing which is executed in the remote control terminal 102 will be described. This processing is executed in a repeated manner by the terminal controller 116 every time the received data from the camera body 101 is updated, for example. In step 451, shot image data and various control data sent from the camera body 101 are received and the content of the data is analyzed. If a face is included in the image data, the above-described object ID and data of face position and face size are also included in the received data.

Next, in step 452, the image corresponding to the image data received from the camera body 101 is displayed in the terminal display 114. Then, in step 453, whether an object ID and data of the face position and the face size are included in the received data is determined. If it is determined that the object ID and the data of the face position and the face size are not included, the processing proceeds to step 455. If it is determined that the object ID and the data of the face position and the face size are included, the processing proceeds to step 454. In step 454, the frame display indicating the face region is displayed to be superimposed on the image data as described with reference to FIG. 3C by using the received data of the face position and the face size and the processing proceeds to step 455.

In step 455, whether a user specified the target region for the AF and AE controls is determined. In particular, whether the target region is determined by touching the touch panel as described with reference to FIG. 3C or by the OK key is determined. If it is determined that the target region for the AF and AE controls is not specified, the processing proceeds to step 460 and various control data are sent to the camera body 101. However, in such a case, because the target region for the AF and AE controls is not specified, control information for specifying the target region for the AF and AE controls is not included in the transmission data. Thereafter, the processing returns to step 451 and switches to the next processing.

On the other hand, if it is determined that a target region for the AF and AE controls is specified in step 455, the processing proceeds to step 456 and executes a process for determining the identification information (object ID) of the object described with reference to FIGS. 3A to 3D.

Next, in step 457, whether a user touched a position other than the face region is determined. If it is determined that a position other than the face region is touched, the processing proceeds to step 459 and the position information (operation information) in the screen where specified by touching is detected, and this position information is set as the transmission data to be sent to the camera body 101. In this way, as described in step 412 and step 416, the camera body 101 can be controlled so as to set the AF and AE control region on the basis of the touched position information, similarly as in the conventional art in a case where a user touched a position other than the face region. After setting the position information as the transmission data in step 459, the processing proceeds to step 460 and data including the position information and the control information which specifies the target region for the AF and AE controls is sent to the camera body 101. Thereafter, the processing returns to step 451 and switches to the next processing.

If it is determined that a user specified the face region in step 457, the processing proceeds to step 458 and the object ID which is specified by a user is set as the transmission data. Then, in step 460, data including the object ID and the control information which specifies the target region for the AF and AE controls is sent to the camera body 101. In this way, because the AF and AE control region is set to the object region corresponding to the specified object ID in the camera body 101 as described above in step 414, the AF and AE control region is set correctly even if the communication delay occurs. Thereafter, the processing returns to step 451 and switches to the next processing.

As described above, according to the present embodiment, if a user specifies the face region, the identification information of the object specified as the target for the AF and AE controls is sent to the camera body from the remote control terminal instead of the position information of the target region for the AF and AE controls as in the conventional art. Then, with the identification information received from the remote control terminal and the detection and tracking information of the object during the communication delay, the AF and AE control region is set to the position of the object which is specified as the target for the AF and AE controls in the camera body. By having such configuration, even if the communication delay occurs between the camera body and the remote control terminal, the AF and AE control region can be set correctly with respect to a moving object.

In the above description, the detector of the object is configured to detect a person's face. However, a detector which detects parts other than a person's face such as a body may also be used as long as a position of an object region included in an image can be executed. Further, for example, a detector which detects an object other than a person by detecting a region of a specific color or pattern may also be used.

While the present invention has been described with reference to exemplary embodiments, it is to be understood that the invention is not limited to the disclosed exemplary embodiments. Parts of the above described embodiment may be combined arbitrarily.

The scope of the invention is however defined by the appended claims.

### [OTHER EMBODIMENTS]

The object of the present invention can also be achieved as described below. That is, a storage medium in which program code of software describing the procedure for realizing the functions of the above described embodiment is to be supplied to an image pickup apparatus and a remote control terminal. Then, a computer (or a CPU, a MPU, etc.) of the image pickup apparatus and the remote control terminal reads the program code stored in the storage medium and executes the program codes.

In this case, the program code itself which is read from the storage medium realizes the new functions of the present invention, and the storage medium on which the program code is stored and the program constitute the present invention.

As for the storage medium for supplying the program code, for example, a flexible disk, a hard disk, an optical disk, a magnet-optical disk, etc. are suggested. Further, CD-ROM, CD-R, CD-RW, DVD-ROM, DVD-RAM, DVD-RW, DVD-R, an electromagnetic tape, a nonvolatile memory card, ROM, etc. may also be used.

A program embodying the present invention may be carried on or by a carrier medium other than a storage or recording medium. For example, the carrier medium may be a transmission medium such a signal. In this case, the program may be supplied by transmission in the form of a signal through a network (downloading or uploading). The network may be the Internet. A program embodying the present invention may, in particular, be an app downloaded from an app store such as ITunes (a registered trade mark of Apple Corp.) or Google Play.

Moreover, by allowing the program code which the computer reads to be executed, the functions of the above described embodiment are realized. Also, the present invention includes a case where a part of or all of the actual processing is performed by the OS (operating system) which is running on the computer, for example, on the basis of the commands given by the program code and the functions of the above described embodiment are realized through such processing.

Further, the present invention includes the following case. The program code is read from the storage medium first, and the program code is written on a memory provided in an expansion board inserted in the computer or in an expansion unit which is connected with the computer. Thereafter, on the basis of commands of the program code, a part of or all of the actual processing is performed by the CPU provided in the expansion board or the expansion unit, for example.

According to the present invention, an image pickup apparatus, a communication apparatus, a method of controlling the image pickup apparatus, and a method of controlling the communication apparatus which are advantageous to an image pickup control even when a communication delay occurs between the image pickup apparatus and the communication apparatus can be provided.

Another aspect of the present invention can provide an image pickup apparatus comprising:
an image pickup device configured to generate an image signal by performing photoelectric conversion on an optical image via an optical system (103);
an object detector configured to detect a plurality of object images based on the image signal obtained from the image pickup device;
an identification information generator configured to allocate identification information to each of the object images detected by the object detector;
a communicator configured to send the image signal generated by the image pickup device and the identification information allocated to each of the object images by the identification information generator to an outside of the image pickup apparatus, wherein the communicator is capable of receiving identification information of an object image relating to the sent identification information of the object image; and
a controller configured to specify a main object image among the object images detected by the object detector based on the received identification information.

Preferably, the identification information of the object image which is received is included in the sent identification information of the object image.

Preferably, when an object image is specified in an image which is being displayed on a display (114) of a communication apparatus, the communicator (113) receives identification information of the specified object image which is determined by the communication apparatus.

Preferably, the controller tracks the detected main object image.

The communicator preferably sends the image signal generated by the image pickup device, position information of the object images detected by the object detector, and the identification information of each of the object images allocated by the identification information generator to the outside of the image pickup apparatus.

The controller preferably performs at least one of an automatic focus control and an automatic exposure control based on the received identification information.

Preferably, the object detector detects positions of the object images and sizes of the object images, and
the communicator sends position information of the object images and size information of the object images.

Another aspect of the present invention can provide a communication apparatus which performs communication, comprising:
a communicator configured to receive an image signal and identification information corresponding to each object image;
a display configured to display an image corresponding to the received image signal; and
a controller configured to specify identification information of an object image based on the displayed image;
characterized in that the communicator is capable of sending the identification information of the object image specified by the controller.

Preferably, the controller further comprises:
a specifying portion configured to specify an object image and position information based on the displayed image; and
a determining portion configured to determine identification information corresponding to the specified object image based on the received identification information of each object image.

Preferably, the displayed image is delayed with respect to a shot image.

Preferably, the specified object image is an object image which is specified with respect to the image displayed on the display.

Preferably, the communicator receives the image signal generated by an image pickup device of an image pickup apparatus and the identification information of each object image allocated by an identification information generator of the image pickup apparatus from the image pickup apparatus.

The communicator preferably receives the image signal generated by an image pickup device of an image pickup apparatus, position information of each object image detected by an object detector of the image pickup apparatus, and the identification information of each object image allocated by an identification information generator of the image pickup apparatus from the image pickup apparatus, and

the controller determines identification information of the specified object image based on the received position information of each object image and the received identification information of each object image.

Preferably, the identification information of the object image determined by the determining portion is used when performing image pickup control of the object image in an image pickup apparatus.

Preferably, the display displays an index at a position of the object image when the image based on the received image signal is displayed.

A further aspect of the present invention can provide a method of controlling an image pickup apparatus including an image pickup device which generates an image signal by performing photoelectric conversion on an optical image via an optical system, the method comprising:
an object image detecting step of detecting a plurality of object images based on the image signal obtained from the image pickup device;
an identification information generating step of allocating identification information to each of the object images detected in the object image detecting step;
a sending step of sending the image signal generated by the image pickup device and the identification information allocated to each of the object images in the identification information generating step to an outside of the image pickup apparatus;
a receiving step of receiving identification information of an object image relating to the sent identification information of the object image; and
a specifying step of specifying a main object image among the object images detected in the object image detecting step based on the received identification information.

Preferably the identification information of the object image which is received is included in the sent identification information of the object image.

Preferably, when an object image is specified in an image which is being displayed on a display of a communication apparatus, identification information of the specified object image determined by the communication apparatus is received in the receiving step.

Preferably, the detected main object image is tracked in the specifying step.

The image signal generated by the image pickup device, position information of the object images detected in the object image detecting step, and identification information of each of the object images allocated in the identification information generating step are preferably sent to the outside of the image pickup apparatus in the sending step.

Preferably, a controlling step performs at least one of automatic focus control and automatic exposure control based on the received identification information.

Preferably, positions of the object images and sizes of the object images are detected in the object image detecting step, and
position information of the object images and size information of the object images are sent in the sending step.

Another aspect of the present invention can provide a method of controlling a communication apparatus which performs communication, the method comprising:
a receiving step of receiving an image signal and identification information corresponding to an object image;
a displaying step of displaying an image corresponding to the received image signal;
a controlling step of specifying identification information of an object image based on the displayed image; and
a sending step of sending the identification information of the specified object image.

Preferably, the controlling step further comprises:
a specifying step of specifying an object image and position information based on the displayed image; and
a determining step of identification information corresponding to the specified object image based on the received identification information of each object image.

Preferably, the displayed image is delayed with respect to a shot image.

Preferably, the specified object image is an object image which is specified with respect to the image displayed on the display.

Preferably, the image signal generated by an image pickup device of an image pickup apparatus and the identification information of each object image allocated by an identification information generator of the image pickup apparatus are received from the image pickup apparatus in the receiving step.

Preferably, in the receiving step, the image signal generated by an image pickup device of an image pickup apparatus, position information of each object image detected by an object detector of the image pickup apparatus, and the identification information of each object image allocated by an identification information generator of the image pickup apparatus are received from the image pickup apparatus, and
in the controlling step, identification information of the specified object image is determined based on the received position information of each object image and the received identification information of each object image.

Preferably, the identification information of the object image determined in the determining step is used when performing image pickup control of the object image in an image pickup apparatus.

Preferably, in the displaying step, an index is displayed at a position of the object image when the image is displayed based on the received image signal.

## Claims

1. An image pickup apparatus (101), adapted to be used with a remote control apparatus (102) external to the image pickup apparatus, the image pickup apparatus comprising:
image pickup means (104) for generating an image signal by performing photoelectric conversion on an optical image;
face detection means (108) for detecting one or more faces based on the image signal generated by the image pickup means (104);
identification information generating means (109) for allocating identification information to each face detected by the face detection means (108);
communication means (112, 113) operable to send the image signal generated by the image pickup device (104) and the identification information allocated to each face by the identification information generating means (109) to the remote control apparatus, and also operable to receive from the remote control apparatus:
the identification information of a detected face that is specified, by a user of the remote control apparatus, as a face for tracking in the case that the user specifies an object for tracking that is a face to which identification information is allocated; and
position information of an object that is specified by the user as an object for tracking in the case that the user specifies an object for tracking that is not a face to which identification information is allocated;
determination means operable to determine whether the communication means receives, from the remote control apparatus, the identification information or the position information; and
control means (109) operable to:
control tracking of the face specified for tracking in the case that it is determined that the identification information is received from the remote control apparatus; and
control tracking of the object specified for tracking in the case that it is determined that the position information is received from the remote control apparatus.

2. The image pickup apparatus (101) according to claim 1,
wherein the received identification information of the object specified by the user is the same as the identification information of one of the detected objects as sent from the remote control apparatus.

3. The image pickup apparatus (101) according to claim 1 or 2,
wherein the communication means (112, 113) is operable to receive identification information of the target object specified in an image displayed on a display (114) of the remote control apparatus (102) based on the image signal sent to the remote control apparatus by the image pickup apparatus.

4. The image pickup apparatus (101) according to any one of claims 1 to 3,
wherein the control means (109) is operable to track the specified target object.

5. The image pickup apparatus (101) according to any one of claims 1 to 4,
wherein the communication means (112, 113) is operable to also send to the remote control apparatus position information of the objects detected by the object detection means (108), and identification information allocated to each of the objects by the identification information generating means (109).

6. The image pickup apparatus (101) according to any one of claims 1 to 5,
wherein the control means (109) is operable to perform at least one of an automatic focus control and an automatic exposure control based on the received identification information.

7. The image pickup apparatus (101) according to any one of claims 1 to 6,
wherein
the object detection means (108) is operable to detect position information of the objects and size information of the objects, and
the communication means (112, 113) is operable to send position information of the detected objects and size information of the detected objects.

8. A remote control apparatus (102), adapted to be used with an image pickup apparatus (101) external to the remote control apparatus, the remote control apparatus comprising:
communication means (118, 119) operable to receive from the image pickup apparatus an image signal representing an image picked up by the image pickup apparatus and identification information allocated by the image pickup apparatus to each of a plurality of faces detected in the image; display means (114) for displaying an image based on the received image signal;
determination means operable to determine, in the case that a target object is specified by a user of the remote control apparatus, whether or not the specified target object is a face to which identification information is allocated;
control means (116) for providing, in the case that the determination means determines that the target object specified by a user is a face to which identification information is allocated, identification information of the target object specified by the user;
wherein the communication means (118,119) is further operable to send to the image pickup apparatus:
the identification information of the detected face that is specified as the target object in the case that the determination means determines that the specified target object is a face to which identification information is allocated; and
position information of the specified target object in the case that the determination means determines that the specified target object is not a face to which identification information is allocated.

9. The remote control apparatus (102) according to claim 8,
wherein the control means (116) further comprises:
specifying portion operable to specify the target object and position information based on the displayed image; and
a determining portion operable to determine identification information for the target object based on the displayed image from among the objects for which identification information has been received by the communication means.

10. The remote control apparatus (102) according to claim 8 or 9,
wherein the image picked up by the image pickup means is displayed with a delay with respect to the picking up of the image.

11. The remote control apparatus (102) according to any one of claims 8 to 10,
wherein the target object is an object which is specified by a user with respect to the image displayed on the display means (114) of the remote control apparatus.

12. The remote control apparatus (102) according to any one of claims 8 to 11,
wherein the communication means (118, 119) is operable to receive the image signal and the identification information allocated by the image pickup apparatus to each of a plurality of objects detected in the image.

13. The remote control apparatus (102) according to any one of claims 8 to 12,
wherein
the communication means (118, 119) is further operable to receive from the image pickup apparatus position information of each detected object, and
the control means (116) is operable to determine the identification information of the target object based on the received position information and identification information of each object .

14. The remote control apparatus (102) according to claim 9,
wherein the identification information of the target object determined by the determining portion of the control means (116) is used when performing image pickup control of the target object in the image pickup apparatus (101).

15. The remote control apparatus (102) according to any one of claims 8 to 14,
wherein the display means (114) displays a visual indication at a position of at least one said object when the image based on the received image signal is displayed.

16. A method of controlling an image pickup apparatus (101) adapted to be used with a remote control apparatus (102) external to the image pickup apparatus, the method comprising:
an image signal generating step of generating an image signal by performing photoelectric conversion on an optical image;
a face detecting step of detecting one or more faces based on the image signal generated in the image signal generating step;
an identification information generating step of allocating identification information to each face detected in the face detecting step;
a sending step of sending the image signal generated by the image pickup device (104) and the identification information allocated to each face in the identification information generating step to the remote control apparatus (102);
a receiving step of receiving, from the remote control apparatus:
identification information of a detected face that is specified, by a user of the remote control apparatus, as a face for tracking in the case that the user specifies an object for tracking that is a face to which identification information is allocated; and
position information of an object that is specified by the user as an object for tracking in the case that the user specifies an object for tracking that is not a face to which identification information is allocated;
a determining step of determining whether identification information or position information is received from the remote control apparatus;
a controlling step of controlling tracking of the face specified for tracking in the case that it is determined that the identification information is received from the remote control apparatus; and
a controlling step of controlling tracking of the object specified for tracking in the case that it is determined that the position information is received from the remote control apparatus.

17. The method of controlling the image pickup apparatus (101) according to claim 16,
wherein the received identification information of the object specified by the user is the same as the identification information of one of the detected objects as sent from the remote control apparatus.

18. The method of controlling the image pickup apparatus (101) according to claim 16 or 17,
wherein the receiving step comprises receiving identification information of the target object specified in an image displayed on a display means (114) of the remote control apparatus (102).

19. The method of controlling the image pickup apparatus (101) according to any one of claims 16 to 18,
further comprising tracking the specified target object.

20. The method of controlling the image pickup apparatus (101) according to any one of claims 16 to 19,
wherein the sending step comprises sending to the remote control apparatus position information of the objects detected in the object detecting step, and identification information allocated to each of the objects in the identification information generating step.

21. The method of controlling the image pickup apparatus (101) according to any one of claims 16 to 20, further comprising a controlling step of performing at least one of automatic focus control and automatic exposure control based on the received identification information.

22. The method of controlling the image pickup apparatus (101) according to any one of claims 16 to 21,
wherein
positions of the objects and sizes of the objects are detected in the object detecting step, and
position information of the detected objects and size information of the detected objects are sent in the sending step.

23. A method of controlling a remote control apparatus (102) adapted to be used with an image pickup apparatus (101) external to the remote control apparatus (102) the method comprising:
a receiving step of receiving an image signal representing an image picked up by the image pickup apparatus and identification information allocated by the image pickup apparatus to each of a plurality of faces detected in the image;
a displaying step of displaying an image based on the received image signal;
a determining step of determining, in the case that a target object is specified by a user of the remote control apparatus, whether or not the specified target object is a face to which identification information is allocated;
a controlling step of providing, in the case that it is determined that the target object specified by a user is a face to which identification information is allocated, identification information of the target object specified by the user; and
a sending step of sending to the image pickup apparatus:
the identification information of the detected face that is specified as the target object in the case that it is determined that the specified target object is a face to which identification information is allocated; and
the position information of the specified object in the case that the specified target object is not a face to which identification information is allocated.

24. The method of controlling the remote control apparatus (102) according to claim 23,
wherein the controlling step further comprises:
a specifying step of specifying the target object and position information based on the displayed image; and
a determining step of determining identification information of the target object based on the displayed image from among the objects for which identification information has been received.

25. The method of controlling the remote control apparatus (102) according to claim 23 or 24,
wherein the image picked up by the image pickup apparatus is displayed in the displaying step with a delay with respect to the picking up of the image.

26. The method of controlling the remote control apparatus (102) according to any one of claims 23 to 25,
wherein the target object is an object which is specified by a user with respect to the image displayed by the remote control apparatus in the displaying step.

27. The method of controlling the remote control apparatus (102) according to any one of claims 23 to 26,
wherein the receiving step comprises receiving the image signal and the identification information allocated by the image pickup apparatus (101)to each of a plurality of objects detected in the image.

28. The method of controlling the remote control apparatus (102) according to any one of claims 23 to 27,
wherein
the receiving step further comprises receiving from the image pickup apparatus position information of each detected object , and
the controlling step further comprises determining identification information of the target object based on the received position information and identification information of each object.

29. The method of controlling the remote control apparatus (101) according to claim 24,
wherein the identification information of the target object determined in the controlling step is used when performing image pickup control of the target object in the image pickup apparatus (101).

30. The method of controlling the remote control apparatus (102) according to any one of claims 23 to 29,
wherein the displaying step further comprises displaying a visual indication at a position of at least one said object when the image based on the received image signal is displayed.

31. A program which, when executed by a processor or computer in an image pickup apparatus, causes the processor or computer to carry out the method of any one of claims 16 to 22.

32. A program which, when executed by a processor or computer in a remote control apparatus, causes the processor or computer to carry out the method of any one of claims 23 to 30.

## Patentansprüche

1. Bildaufnahmevorrichtung (101), die zur Verwendung mit einer außerhalb der Bildaufnahmevorrichtung befindlichen Fernsteuerungsvorrichtung (102) ausgelegt ist, wobei die Bildaufnahmevorrichtung umfasst:
eine Bildaufnahmeeinrichtung (104) zum Erzeugen eines Bildsignals durch Durchführen einer fotoelektrischen Umwandlung auf einem optischen Bild;
eine Gesichtserfassungseinrichtung (108) zum Erfassen eines Gesichts oder mehrerer Gesichter basierend auf dem durch die Bildaufnahmeeinrichtung (104) erzeugten Bildsignal;
eine Identifikationsinformationserzeugungseinrichtung (109) zum Zuweisen von Identifikationsinformation zu einem jeweiligen durch die Gesichtserfassungseinrichtung (108) erfassten Gesicht;
eine Kommunikationseinrichtung (112, 113), die betreibbar ist, das durch die Bildaufnahmeeinrichtung (104) erzeugte Bildsignal und die einem jeweiligen Gesicht durch die Identifikationsinformationserzeugungseinrichtung (109) zugewiesene Identifikationsinformation an die Fernsteuerungsvorrichtung zu senden, und die außerdem betreibbar ist, von der Fernsteuerungsvorrichtung Folgendes zu empfangen:
die Identifikationsinformation eines erfassten Gesichts, das durch einen Benutzer der Fernsteuerungsvorrichtung als ein zu verfolgendes Gesicht spezifiziert wird, falls der Benutzer ein zu verfolgendes Objekt spezifiziert, das ein Gesicht ist, welchem Identifikationsinformation zugewiesen ist, und
Positionsinformation eines Objekts, das durch den Benutzer als ein zu verfolgendes Objekt spezifiziert wird, falls der Benutzer ein zu verfolgendes Objekt spezifiziert, das kein Gesicht ist, welchem Identifikationsinformation zugewiesen ist;
eine Bestimmungseinrichtung, die betreibbar ist zum Bestimmen, ob die Kommunikationsvorrichtung von der Fernsteuerungsvorrichtung die Identifikationsinformation oder die Positionsinformation empfängt; und
eine Steuerungseinrichtung (109), die betreibbar ist zum:
Steuern der Verfolgung des zur Verfolgung spezifizierten Gesichts, falls bestimmt wird, dass die Identifikationsinformation von der Fernsteuerungsvorrichtung empfangen wird, und
Steuern der Verfolgung des zur Verfolgung spezifizierten Objekts, falls bestimmt wird, dass die Positionsinformation von der Fernsteuerungsvorrichtung empfangen wird.

2. Bildaufnahmevorrichtung (101) nach Anspruch 1,
wobei die empfangene Identifikationsinformation des durch den Benutzer spezifizierten Objekts die gleiche ist wie die Identifikationsinformation eines der erfassten Objekte wie von der Fernsteuerungsvorrichtung gesendet.

3. Bildaufnahmevorrichtung (101) nach Anspruch 1 oder 2,
wobei die Kommunikationseinrichtung (112, 113) betreibbar ist zum Empfangen von Identifikationsinformation des Zielobjekts, welches in einem Bild spezifiziert wird, das basierend auf dem durch die Bildaufnahmevorrichtung an die Fernsteuerungsvorrichtung gesendeten Bildsignal auf einer Anzeige (114) der Fernsteuerungsvorrichtung (102) angezeigt wird.

4. Bildaufnahmevorrichtung (101) nach einem der Ansprüche 1 bis 3,
wobei die Steuereinrichtung (109) betreibbar ist, das spezifizierte Zielobjekt zu verfolgen.

5. Bildaufnahmevorrichtung (101) nach einem der Ansprüche 1 bis 4,
wobei die Kommunikationseinrichtung (112, 113) betreibbar ist, an die Fernsteuerungsvorrichtung außerdem Positionsinformation der durch die Objekterfassungseinrichtung (108) erfassten Objekte sowie einem jeweiligen der Objekte durch die Identifikationsinformationserzeugungseinrichtung (109) zugewiesene Identifikationsinformation zu senden.

6. Bildaufnahmevorrichtung (101) nach einem der Ansprüche 1 bis 5,
wobei die Steuereinrichtung (109) betreibbar ist, basierend auf der empfangenen Identifikationsinformation mindestens eines von einer automatischen Fokussteuerung und einer automatischen Belichtungssteuerung durchzuführen.

7. Bildaufnahmevorrichtung (101) nach einem der Ansprüche 1 bis 6,
wobei
die Objekterfassungseinrichtung (108) betreibbar ist, Positionsinformation der Objekte und Größeninformation der Objekte zu erfassen, und
die Kommunikationseinrichtung (112, 113) betreibbar ist, Positionsinformation der erfassten Objekte und Größeninformation der erfassten Objekte zu senden.

8. Fernsteuerungsvorrichtung (102), die zur Verwendung mit einer außerhalb der Fernsteuerungsvorrichtung befindlichen Bildaufnahmevorrichtung (101) ausgelegt ist, wobei die Fernsteuerungsvorrichtung umfasst:
eine Kommunikationseinrichtung (118, 119), die betreibbar ist zum Empfangen eines Bildsignals, welches ein durch die Bildaufnahmevorrichtung aufgenommenes Bild darstellt, sowie von Identifikationsinformation, die durch die Bildaufnahmevorrichtung einem jeweiligen von mehreren im Bild erfassten Gesichtern zugewiesen wurde, von der Bildaufnahmevorrichtung;
eine Anzeigeeinrichtung (114) zum Anzeigen eines Bilds basierend auf dem empfangenen Bildsignal;
eine Bestimmungseinrichtung, die betreibbar ist zum Bestimmen, ob das spezifizierte Zielobjekt ein Gesicht ist, welchem Identifikationsinformation zugewiesen ist, falls durch einen Benutzer der Fernsteuerungsvorrichtung ein Zielobjekt spezifiziert wird;
eine Steuereinrichtung (116) zum Bereitstellen von Identifikationsinformation des durch den Benutzer spezifizierten Zielobjekts, falls die Bestimmungseinrichtung bestimmt, dass das durch den Benutzer spezifizierte Zielobjekt ein Gesicht ist, dem Identifikationsinformation zugewiesen ist;
wobei die Kommunikationseinrichtung (118, 119) weiterhin betreibbar ist, an die Bildaufnahmevorrichtung Folgendes zu senden:
die Identifikationsinformation des erfassten Gesichts, das als das Zielobjekt spezifiziert ist, falls die Bestimmungseinrichtung bestimmt, dass das spezifizierte Zielobjekt ein Gesicht ist, welchem Identifikationsinformation zugewiesen ist, und
Positionsinformation des spezifizierten Zielobjekts, falls die Bestimmungseinrichtung bestimmt, dass das spezifizierte Zielobjekt kein Gesicht ist, dem Identifikationsinformation zugewiesen ist.

9. Fernsteuerungsvorrichtung (102) nach Anspruch 8,
wobei die Steuereinrichtung (116) weiterhin umfasst:
einen Spezifizierungsabschnitt, der betreibbar ist, das Zielobjekt und Positionsinformation basierend auf dem angezeigten Bild zu spezifizieren; und
einen Bestimmungsabschnitt, der betreibbar ist, basierend auf dem angezeigten Bild Identifikationsinformation für das Zielobjekt aus den Objekten zu bestimmen, für welche Identifikationsinformation durch die Kommunikationseinrichtung empfangen worden ist.

10. Fernsteuerungsvorrichtung (102) nach Anspruch 8 oder 9,
wobei das durch die Bildaufnahmeeinrichtung aufgenommene Bild mit einer Verzögerung bezüglich der Bildaufnahme angezeigt wird.

11. Fernsteuerungsvorrichtung (102) nach einem der Ansprüche 8 bis 10,
wobei das Zielobjekt ein Objekt ist, welches durch einen Benutzer in Bezug auf das auf der Anzeigeeinrichtung (114) der Fernsteuerungsvorrichtung angezeigte Bild spezifiziert wird.

12. Fernsteuerungsvorrichtung (102) nach einem der Ansprüche 8 bis 11,
wobei die Kommunikationseinrichtung (118, 119) betreibbar ist zum Empfangen des Bildsignals und der Identifikationsinformation, die durch die Bildaufnahmevorrichtung einem jeweiligen von mehreren im Bild erfassten Objekten zugewiesen wird.

13. Fernsteuerungsvorrichtung (102) nach einem der Ansprüche 8 bis 12,
wobei
die Kommunikationseinrichtung (118, 119) weiterhin betreibbar ist, von der Bildaufnahmevorrichtung Positionsinformation eines jeweiligen erfassten Objekts zu erhalten, und
die Steuereinrichtung (116) betreibbar ist, die Identifikationsinformation des Zielobjekts basierend auf der empfangenen Positionsinformation und auf Identifikationsinformation eines jeweiligen Objekts zu bestimmen.

14. Fernsteuerungsvorrichtung (102) nach Anspruch 9,
wobei beim Durchführen von Bildaufnahmesteuerung des Zielobjekts in der Bildaufnahmevorrichtung (101) die Identifikationsinformation des durch den Bestimmungsabschnitt der Steuerungseinrichtung (116) bestimmten Zielobjekts verwendet wird.

15. Fernsteuerungsvorrichtung (102) nach einem der Ansprüche 8 bis 14,
wobei die Anzeigeeinrichtung (114) eine visuelle Kennzeichnung an einer Position mindestens eines der Objekte anzeigt, wenn das auf dem empfangenen Bildsignal basierende Bild angezeigt wird.

16. Verfahren zum Steuern einer Bildaufnahmevorrichtung (101), die zur Verwendung mit einer außerhalb der Bildaufnahmevorrichtung befindlichen Fernsteuerungsvorrichtung (102) ausgelegt ist, wobei das Verfahren umfasst:
einen Bildsignalerzeugungsschritt zum Erzeugen eines Bildsignals durch Durchführen einer fotoelektrischen Umwandlung an einem optischen Bild;
einen Gesichtserfassungsschritt zum Erfassen eines Gesichts oder mehrerer Gesichter basierend auf dem im Bildsignalerzeugungsschritt erzeugten Bildsignal;
einen Identifikationsinformationserzeugungsschritt zum Zuweisen von Identifikationsinformation zu einem jeweiligen im Gesichtserfassungsschritt erfassten Gesicht;
einen Sendeschritt zum Senden des durch die Bildaufnahmeeinrichtung (104) erzeugten Bildsignals und der einem jeweiligen Gesicht im Identifikationsinformationserzeugungsschritt zugewiesenen Identifikationsinformation an die Fernsteuerungsvorrichtung (102);
einen Empfangsschritt zum Empfangen des Folgenden von der Fernsteuerungsvorrichtung:
Identifikationsinformation eines erfassten Gesichts, das durch einen Benutzer der Fernsteuerungsvorrichtung als ein zu verfolgendes Gesicht spezifiziert wird, falls der Benutzer ein zu verfolgendes Objekt spezifiziert, das ein Gesicht ist, welchem Identifikationsinformation zugewiesen ist, und
Positionsinformation eines Objekts, das durch den Benutzer als ein zu verfolgendes Objekt spezifiziert wird, falls der Benutzer ein zu verfolgendes Objekt spezifiziert, das kein Gesicht ist, welchem Identifikationsinformation zugewiesen ist;
einen Bestimmungsschritt zum Bestimmen, ob Identifikationsinformation oder Positionsinformation von der Fernsteuerungsvorrichtung empfangen wird;
einen Steuerschritt zum Steuern der Verfolgung des zur Verfolgung spezifizierten Gesichts, falls bestimmt wird, dass die Identifikationsinformation von der Fernsteuerungsvorrichtung empfangen wird; und
einen Steuerschritt zum Steuern der Verfolgung des zur Verfolgung spezifizierten Objekts, falls bestimmt wird, dass die Positionsinformation von der Fernsteuerungsvorrichtung empfangen wird.

17. Verfahren zum Steuern der Bildaufnahmevorrichtung (101) nach Anspruch 16,
wobei die empfangene Identifikationsinformation des durch den Benutzer spezifizierten Objekts die gleiche ist wie die Identifikationsinformation eines der erfassten Objekte wie von der Fernsteuerungsvorrichtung gesendet.

18. Verfahren zum Steuern der Bildaufnahmevorrichtung (101) nach einem der Ansprüche 16 oder 17,
wobei der Empfangsschritt Empfangen von Identifikationsinformation des Zielobjekts umfasst, welches in einem auf einer Anzeigeeinrichtung (114) der Fernsteuerungsvorrichtung (102) angezeigten Bild spezifiziert wird.

19. Verfahren zum Steuern der Bildaufnahmevorrichtung (101) nach einem der Ansprüche 16 bis 18, das weiterhin Verfolgung des spezifizierten Zielobjekts umfasst.

20. Verfahren zum Steuern der Bildaufnahmevorrichtung (101) nach einem der Ansprüche 16 bis 19,
wobei der Sendeschritt Senden von Positionsinformation der im Objekterfassungsschritt erfassten Objekte sowie von Identifikationsinformation, die einem jeweiligen der Objekte im Identifikationsinformationserzeugungsschritt zugewiesen wird, an die Fernsteuerungsvorrichtung umfasst.

21. Verfahren zum Steuern der Bildaufnahmevorrichtung (101) nach einem der Ansprüche 16 bis 20, das weiterhin einen Steuerschritt zum Durchführen mindestens eines von einer automatischen Fokussteuerung und einer automatischen Belichtungssteuerung basierend auf der empfangenen Identifikationsinformation umfasst.

22. Verfahren zum Steuern der Bildaufnahmevorrichtung (101) nach einem der Ansprüche 16 bis 21,
wobei
Positionen der Objekte und Größen der Objekte im Objekterfassungsschritt erfasst werden, und
Positionsinformation der erfassten Objekte und Größeninformation der erfassten Objekte im Sendeschritt gesendet werden.

23. Verfahren zum Steuern einer Fernsteuerungsvorrichtung (102), die zur Verwendung mit einer außerhalb der Fernsteuerungsvorrichtung (102) befindlichen Bildaufnahmevorrichtung (101) ausgelegt ist, wobei das Verfahren umfasst:
einen Empfangsschritt zum Empfangen eines Bildsignals, welches ein durch die Bildaufnahmevorrichtung aufgenommenes Bild darstellt, sowie von Identifikationsinformation, die durch die Bildaufnahmevorrichtung einem jeweiligen von mehreren im Bild erfassten Gesichtern zugewiesen wurde;
einen Anzeigeschritt zum Anzeigen eines Bilds basierend auf dem empfangenen Bildsignal;
einen Bestimmungsschritt zum Bestimmen, ob das spezifizierte Zielobjekt ein Gesicht ist, welchem Identifikationsinformation zugewiesen ist, falls durch einen Benutzer der Fernsteuerungsvorrichtung ein Zielobjekt spezifiziert wird;
einen Steuerschritt zum Bereitstellen von Identifikationsinformation des durch einen Benutzer spezifizierten Zielobjekts, falls bestimmt wird, dass das durch den Benutzer spezifizierte Zielobjekt ein Gesicht ist, welchem Identifikationsinformation zugewiesen ist; und
einen Sendeschritt zum Senden von Folgendem an die Bildaufnahmevorrichtung:
die Identifikationsinformation des erfassten Gesichts, das als das Zielobjekt spezifiziert wird, falls bestimmt wird, dass das spezifizierte Zielobjekt ein Gesicht ist, welchem Identifikationsinformation zugewiesen ist, und
die Positionsinformation des spezifizierten Zielobjekts, falls das spezifizierte Zielobjekt kein Gesicht ist, welchem Identifikationsinformation zugewiesen ist.

24. Verfahren zum Steuern der Fernsteuerungsvorrichtung (102) nach Anspruch 23,
wobei der Steuerschritt weiterhin umfasst:
einen Spezifizierungsschritt zum Spezifizieren des Zielobjekts und von Positionsinformation basierend auf dem angezeigten Bild; und
einen Bestimmungsschritt zum Bestimmen von Identifikationsinformation des Zielobjekts aus den Objekten, für welche Identifikationsinformation empfangen worden ist, basierend auf dem angezeigten Bild.

25. Verfahren zum Steuern der Fernsteuerungsvorrichtung (102) nach Anspruch 23 oder 24,
wobei das durch die Bildaufnahmevorrichtung aufgenommene Bild im Anzeigeschritt mit einer Verzögerung bezüglich der Bildaufnahme angezeigt wird.

26. Verfahren zum Steuern der Fernsteuerungsvorrichtung (102) nach einem der Ansprüche 23 bis 25,
wobei das Zielobjekt ein Objekt ist, welches durch einen Benutzer in Bezug auf das durch die Fernsteuerungsvorrichtung im Anzeigeschritt angezeigte Bild spezifiziert wird.

27. Verfahren zum Steuern der Fernsteuerungsvorrichtung (102) nach einem der Ansprüche 23 bis 26,
wobei der Empfangsschritt Empfangen des Bildsignals und der Identifikationsinformation umfasst, die durch die Bildaufnahmevorrichtung (101) einem jeweiligen von mehreren im Bild erfassten Objekte zugewiesen wird.

28. Verfahren zum Steuern der Fernsteuerungsvorrichtung (102) nach einem der Ansprüche 23 bis 27,
wobei
der Empfangsschritt weiterhin Empfangen von Positionsinformation eines jeweiligen erfassten Objekts von der Bildaufnahmevorrichtung umfasst, und
der Steuerschritt weiterhin Bestimmen von Identifikationsinformation des Zielobjekts basierend auf der empfangenen Positionsinformation und Identifikationsinformation eines jeweiligen Objekts umfasst.

29. Verfahren zum Steuern der Fernsteuerungsvorrichtung (101) nach Anspruch 24,
wobei beim Durchführen von Bildaufnahmesteuerung des Zielobjekts in der Bildaufnahmevorrichtung (101) die Identifikationsinformation des im Steuerschritt bestimmten Zielobjekts verwendet wird.

30. Verfahren zum Steuern der Fernsteuerungsvorrichtung (102) nach einem der Ansprüche 23 bis 29,
wobei der Anzeigeschritt weiterhin umfasst: Anzeigen einer visuellen Kennzeichnung an einer Position mindestens eines der Objekte, wenn das auf dem empfangenen Bildsignal basierende Bild angezeigt wird.

31. Programm, das bei Ausführen durch einen Prozessor oder Computer in einer Bildaufnahmevorrichtung den Prozessor oder Computer veranlasst, das Verfahren nach einem der Ansprüche 16 bis 22 auszuführen.

32. Programm, das bei Ausführen durch einen Prozessor oder Computer in einer Fernsteuervorrichtung den Prozessor oder Computer veranlasst, das Verfahren nach einem der Ansprüche 23 bis 30 auszuführen.

## Revendications

1. Appareil de prise d'image (101), conçu pour être utilisé avec un appareil de commande à distance (102) externe à l'appareil de prise d'image, l'appareil de prise d'image comprenant :
un moyen de prise d'image (104) destiné à générer un signal d'image par une application d'une conversion photoélectrique à une image optique ;
un moyen de détection de visages (108) destiné à détecter un ou plusieurs visages sur la base du signal d'image généré par le moyen de prise d'image (104) ;
un moyen de génération d'informations d'identification (109) destiné à attribuer des informations d'identification à chaque visage détecté par le moyen de détection de visages (108) ;
un moyen de communication (112, 113) ayant pour fonction d'envoyer le signal d'image généré par le dispositif de prise d'image (104) et les informations d'identification attribuées à chaque visage par le moyen de génération d'informations d'identification (109) à l'appareil de commande à distance, et ayant également pour fonction de recevoir, de l'appareil de commande à distance :
les informations d'identification d'un visage détecté qui a été spécifié, par un utilisateur de l'appareil de commande à distance, comme étant un visage à poursuivre dans le cas dans lequel l'utilisateur spécifie un objet de poursuite qui est un visage auquel ont été attribuées des informations d'identification ; et
des informations de position d'un objet qui a été spécifié par l'utilisateur comme étant un objet à poursuivre dans le cas dans lequel l'utilisateur spécifie un objet à poursuivre qui n'est pas un visage auquel ont été attribuées des informations d'identification ;
un moyen de détermination ayant pour fonction de déterminer si le moyen de communication reçoit, de l'appareil de commande à distance, les informations d'identification ou les informations de position ; et
un moyen de commande (109) ayant pour fonction de :
commander une poursuite du visage spécifié à poursuivre dans le cas dans lequel il est déterminé que les informations d'identification ont été reçues de l'appareil de commande à distance ; et
commander une poursuite de l'objet spécifié à poursuivre dans le cas dans lequel il est déterminé que les informations de position ont été reçues de l'appareil de commande à distance.

2. Appareil de prise d'image (101) selon la revendication 1,
dans lequel les informations d'identification reçues de l'objet spécifié par l'utilisateur sont les mêmes que les informations d'identification d'un objet parmi les objets détectés envoyées à partir de l'appareil de commande à distance.

3. Appareil de prise d'image (101) selon la revendication 1 ou 2,
dans lequel le moyen de communication (112, 113) a pour fonction de recevoir des informations d'identification de l'objet cible spécifié dans une image affichée sur un moyen d'affichage (114) de l'appareil de commande à distance (102) sur la base du signal d'image envoyé à l'appareil de commande à distance par l'appareil de prise d'image.

4. Appareil de prise d'image (101) selon l'une quelconque des revendications 1 à 3,
dans lequel le moyen de commande (109) a pour fonction de poursuivre l'objet cible spécifié.

5. Appareil de prise d'image (101) selon l'une quelconque des revendications 1 à 4,
dans lequel le moyen de communication (112, 113) a également pour fonction d'envoyer, à l'appareil de commande à distance, des informations de position des objets détectés par le moyen de détection d'objets (108), et des informations d'identification attribuées à chacun des objets par le moyen de génération d'informations d'identification (109).

6. Appareil de prise d'image (101) selon l'une quelconque des revendications 1 à 5,
dans lequel le moyen de commande (109) a pour fonction d'exécuter au moins l'une d'une commande de mise au point automatique et d'une commande d'exposition automatique sur la base des informations d'identification reçues.

7. Appareil de prise d'image (101) selon l'une quelconque des revendications 1 à 6,
dans lequel
le moyen de détection d'objets (108) a pour fonction de détecter des informations de position des objets et des informations de taille des objets, et
le moyen de communication (112, 113) a pour fonction d'envoyer des informations de position des objets détectés et des informations de taille des objets détectés.

8. Appareil de commande à distance (102), conçu pour être utilisé avec un appareil de prise d'image (101) externe à l'appareil de commande à distance, l'appareil de commande à distance comprenant :
un moyen de communication (118, 119) ayant pour fonction de recevoir, de l'appareil de prise d'image, un signal d'image représentant une image prise par l'appareil de prise d'image et des informations d'identification attribuées par l'appareil de prise d'image à chaque visage d'une pluralité de visages détectés dans l'image ;
un moyen d'affichage (114) destiné à afficher une image sur la base du signal d'image reçu ;
un moyen de détermination ayant pour fonction de déterminer, dans le cas dans lequel un objet cible a été spécifié par un utilisateur de l'appareil de commande à distance, si l'objet cible spécifié est, ou non, un visage auquel ont été attribuées des informations d'identification ;
un moyen de commande (116) destiné à fournir, dans le cas dans lequel le moyen de détermination détermine que l'objet cible spécifié par un utilisateur est un visage auquel ont été attribué des informations d'identification, des informations d'identification de l'objet cible spécifié par l'utilisateur ;
dans lequel le moyen de communication (118, 119) a en outre pour fonction d'envoyer, à l'appareil de prise d'image :
les informations d'identification du visage détecté qui a été spécifié comme l'objet cible dans le cas dans lequel le moyen de détermination détermine que l'objet cible spécifié est un visage auquel ont été attribuées des informations d'identification ; et
des informations de position de l'objet cible spécifié dans le cas dans lequel le moyen de détermination détermine que l'objet cible spécifié n'est pas un visage auquel ont été attribuées des informations d'identification.

9. Appareil de commande à distance (102) selon la revendication 8,
dans lequel le moyen de commande (116) comprend en outre :
une partie de spécification ayant pour fonction de spécifier l'objet cible et des informations de position sur la base de l'image affichée ; et
une partie de détermination ayant pour fonction de déterminer des informations d'identification de l'objet cible sur la base de l'image affichée parmi les objets pour lesquels des informations d'identification ont été reçues par le moyen de communication.

10. Appareil de commande à distance (102) selon la revendication 8 ou 9,
dans lequel l'image prise par le moyen de prise d'image est affichée avec un certain retard par rapport à la prise de l'image.

11. Appareil de commande à distance (102) selon l'une quelconque des revendications 8 à 10,
dans lequel l'objet cible est un objet qui a été spécifié par l'utilisateur par rapport à l'image affichée sur le moyen d'affichage (114) de l'appareil de commande à distance.

12. Appareil de commande à distance (102) selon l'une quelconque des revendications 8 à 11,
dans lequel le moyen de communication (118, 119) a pour fonction de recevoir le signal d'image et les informations d'identification attribuées par l'appareil de prise d'image à chaque objet d'une pluralité d'objets détectés dans l'image.

13. Appareil de commande à distance (102) selon l'une quelconque des revendications 8 à 12,
dans lequel
le moyen de communication (118, 119) a en outre pour fonction de recevoir, de l'appareil de prise d'image, des informations de position de chaque objet détecté, et
le moyen de commande (116) a pour fonction de déterminer les informations d'identification de l'objet cible sur la base des informations de position et des informations d'identification de chaque objet reçues.

14. Appareil de commande à distance (102) selon la revendication 9,
dans lequel les informations d'identification de l'objet cible déterminées par la partie de détermination du moyen de commande (116) sont utilisées lors de l'exécution d'une commande de prise d'image de l'objet cible dans l'appareil de prise d'image (101).

15. Appareil de commande à distance (102) selon l'une quelconque des revendications 8 à 14,
dans lequel le moyen d'affichage (114) affiche une indication visuelle à une position d'au moins l'un dudit objet lors de l'affichage de l'image sur la base du signal d'image reçu.

16. Procédé de commande d'un appareil de prise d'image (101) conçu pour être utilisé avec un appareil de commande à distance (102) externe à l'appareil de prise d'image, le procédé comprenant :
une étape de génération de signal d'image consistant à générer un signal d'image par une application d'une conversion photoélectrique à une image optique ;
une étape de détection de visages consistant à détecter un ou plusieurs visages sur la base du signal d'image généré à l'étape de génération de signal d'image ;
une étape de génération d'informations d'identification consistant à attribuer des informations d'identification à chaque visage détecté à l'étape de détection de visages ;
une étape d'envoi consistant à envoyer le signal d'image généré par le dispositif de prise d'image (104) et les informations d'identification attribuées à chaque visage à l'étape de génération d'informations d'identification à l'appareil de commande à distance (102) ;
une étape de réception consistant à recevoir, de l'appareil de commande à distance :
des informations d'identification d'un visage qui a été spécifié, par un utilisateur de l'appareil de commande à distance, comme visage à poursuivre dans le cas dans lequel l'utilisateur spécifie un objet à poursuivre qui est un visage auquel ont été attribuées des informations d'identification ; et
des informations de position d'un objet qui est un objet qui a été spécifié par l'utilisateur comme objet à poursuivre dans le cas dans lequel l'utilisateur spécifie un objet à poursuivre qui n'est pas un visage auquel ont été attribuées des informations d'identification ;
une étape de détermination consistant à déterminer si des informations d'identification ou des informations de position ont été reçues de l'appareil de commande à distance ;
une étape de commande consistant à commander une poursuite du visage spécifié à poursuivre dans le cas dans lequel il est déterminé que les informations d'identification ont été reçues de l'appareil de commande à distance ; et
une étape de commande consistant à commander une poursuite de l'objet spécifié à poursuivre dans un cas dans lequel il est déterminé que les informations de position ont été reçues de l'appareil de commande à distance.

17. Procédé de commande de l'appareil de prise d'image (101) selon la revendication 16,
dans lequel les informations d'identification reçues de l'objet spécifié par l'utilisateur sont les mêmes que les informations d'identification de l'un des objets détectés envoyées par l'appareil de commande à distance.

18. Procédé de commande de l'appareil de prise d'image (101) selon la revendication 16 ou 17,
dans lequel l'étape de réception consiste à recevoir des informations d'identification de l'objet cible spécifié dans une image affichée sur un moyen d'affichage (114) de l'appareil de commande à distance (102).

19. Procédé de commande de l'appareil de prise d'image (101) selon l'une quelconque des revendications 16 à 18,
comprenant en outre une étape consistant à poursuivre l'objet cible spécifié.

20. Procédé de commande de l'appareil de prise d'image (101) selon l'une quelconque des revendications 16 à 19,
dans lequel l'étape d'envoi consiste à envoyer, à l'appareil de commande à distance, des informations de position des objets détectés à l'étape de détection d'objets, et des informations d'identification attribuées à chacun des objets à l'étape de génération d'informations d'identification.

21. Procédé de commande de l'appareil de prise d'image (101) selon l'une quelconque des revendications 16 à 20, comprenant en outre une étape de commande consistant à exécuter au moins l'une d'une commande de mise au point automatique et d'une commande d'exposition automatique sur la base des informations d'identification reçues.

22. Procédé de commande de l'appareil de prise d'image (101) selon l'une quelconque des revendications 16 à 21,
dans lequel
des positions des objets et des tailles des objets sont détectées à l'étape de détection d'objets, et
des informations de position des objets détectés et des informations de taille des objets détectés sont envoyées à l'étape d'envoi.

23. Procédé de commande d'un appareil de commande à distance (102) conçu pour être utilisé avec un appareil de prise d'image (101) externe à l'appareil de commande à distance (102), le procédé comprenant :
une étape de réception consistant à recevoir un signal d'image représentant une image prise par l'appareil de prise d'image et des informations d'identification attribuées par l'appareil de prise d'image à chaque visage d'une pluralité de visages détectés dans l'image ;
une étape d'affichage consistant à afficher une image sur la base du signal d'image reçu ;
une étape de détermination consistant à déterminer, dans le cas dans lequel un objet cible a été spécifié par un utilisateur de l'appareil de commande à distance, si l'objet cible spécifié est, ou non, un visage auquel ont été attribuées des informations d'identification ;
une étape de commande consistant à fournir, dans le cas dans lequel il est déterminé que l'objet cible spécifié par un utilisateur est un visage auquel ont été attribuées des informations d'identification, des informations d'identification de l'objet cible spécifié par l'utilisateur ; et
une étape d'envoi consistant à envoyer, à l'appareil de prise d'image :
les informations d'identification du visage détecté qui a été spécifié comme l'objet cible dans le cas dans lequel il est déterminé que l'objet cible spécifié est un visage auquel ont été attribuées des informations d'identification ; et
les informations de position de l'objet spécifié dans le cas dans lequel l'objet cible spécifié n'est pas un visage auquel ont été attribuées des informations d'identification.

24. Procédé de commande de l'appareil de commande à distance (102) selon la revendication 23,
dans lequel l'étape de commande comprend en outre :
une étape de spécification consistant à spécifier l'objet cible et les informations de position sur la base de l'image affichée ; et
une étape de détermination consistant à déterminer des informations d'identification de l'objet cible sur la base de l'image affichée parmi les objets pour lesquels ont été reçues des informations d'identification.

25. Procédé de commande de l'appareil de commande à distance (102) selon la revendication 23 ou 24,
dans lequel l'image prise par l'appareil de prise d'image est affichée à l'étape d'affichage avec un certain retard par rapport à la prise de l'image.

26. Procédé de commande de l'appareil de commande à distance (102) selon l'une quelconque des revendications 23 à 25,
dans lequel l'objet cible est un objet qui a été spécifié par un utilisateur par rapport à l'image affichée par l'appareil de commande à distance à l'étape d'affichage.

27. Procédé de commande de l'appareil de commande à distance (102) selon l'une quelconque des revendications 23 à 26,
dans lequel l'étape de réception consiste à recevoir le signal d'image et les informations d'identification attribuées par l'appareil de prise d'image (101) à chaque objet d'une pluralité d'objets détectés dans l'image.

28. Procédé de commande de l'appareil de commande à distance (102) selon l'une quelconque des revendications 23 à 27,
dans lequel
l'étape de réception consiste en outre à recevoir, de l'appareil de prise d'image, des informations de position de chaque objet détecté, et
l'étape de commande consiste en outre à déterminer des informations d'identification de l'objet cible sur la base des informations de position et des informations d'identification de chaque objet reçues.

29. Procédé de commande de l'appareil de commande à distance (101) selon la revendication 24,
dans lequel les informations d'identification de l'objet cible déterminées à l'étape de commande sont utilisées lors d'une commande de prise d'image de l'objet cible dans l'appareil de prise d'image (101).

30. Procédé de commande de l'appareil de commande à distance (102) selon l'une quelconque des revendications 23 à 29,
dans lequel l'étape d'affichage consiste en outre à afficher une indication visuelle à une position d'au moins l'un dudit objet lors de l'affichage de l'image sur la base du signal d'image reçu.

31. Programme qui, lorsqu'il est exécuté par un processeur ou par un calculateur d'un appareil de prise d'image, amène le processeur ou le calculateur à mettre en œuvre le procédé selon l'une quelconque des revendications 16 à 22.

32. Programme qui, lorsqu'il est exécuté par un processeur ou par un calculateur d'un appareil de commande à distance, amène le processeur ou le calculateur à mettre en œuvre le procédé selon l'une quelconque des revendications 23 à 30.
